# EUROPEAN PATENT APPLICATION

(11) **EP 3 121 877 A1**
(43) Date of publication of application: **25.01.2017**
(21) Application number: 15178189.5
(22) Date of filing: 24.07.2015
(51) Int. Cl.: H01M 4/131, H01M 4/136, H01M 4/36, H01M 4/505, H01M 4/58, C01G 45/12, H01M 4/1391, H01M 4/1397

(54) **CORE-SHELL PARTICLES COMPRISING ELEMENTAL SULFUR AND MANGANESE DIOXIDE FOR CATHODES OF LITHIUM SULFUR CELLS AND THE SYNTHESIS OF THESE PARTICLES**

(71) Applicant: BASF SE, 67056 Ludwigshafen am Rhein (DE); University of Waterloo The Guelph-Waterloo Centre, Waterloo, ON N2L 3G1 (CA)
(72) Inventor: NAZAR, Linda, Waterloo, Ontario N2V 1Z3 (CA); LIANG, Xiao, Waterloo, Ontario N2K 3W7 (CA); GARSUCH, Arnd, 67063 Ludwigshafen (DE)
(74) Representative: BASF IP Association

(57) **Abstract**

The present invention relates to core-shell particles, each particle comprising
(A) a core comprising elemental sulfur and
(B) a shell, which enwraps core (A), comprising MnO₂.

The present invention further relates to a process for preparing said core-shell particles, to a cathode material for an electrochemical cell comprising said core-shell particles, and to a cathode and an electrochemical cell comprising said cathode materials.

## Description

The present invention relates to core-shell particles, each particle comprising
(A) a core comprising elemental sulfur and
(B) a shell, which enwraps core (A), comprising MnO₂.

The present invention further relates to a process for preparing said core-shell particles, to a cathode material for an electrochemical cell comprising said core-shell particles, and to a cathode and an electrochemical cell comprising said cathode materials.

The present invention further relates to a cathode material for an electrochemical cell comprising said electroactive composite, to a cathode and an electrochemical cell comprising said cathode material and to a process for preparing said electroactive composite.

Secondary batteries, accumulators or rechargeable batteries are just some embodiments by which electrical energy can be stored after generation and used when required. Due to the significantly better power density, there has been a move in recent times away from the water-based secondary batteries to development of batteries in which the charge transport in the electrical cell is accomplished by lithium ions.

However, the energy density of conventional lithium ion batteries which have a carbon anode and a cathode based on metal oxides is limited. New horizons with regard to energy density have been opened up by lithium-sulfur cells. In lithium-sulfur cells, sulfur in the sulfur cathode is reduced via polysulfide ions to S²⁻, which is reoxidized when the cell is charged to form sulfur-sulfur bonds.

A problem, however, is the solubility of the polysulfides, for example Li₂S₄ and Li₂S₆, which are generally soluble in the solvent and can migrate to the anode. The consequences may include: loss of capacitance and deposition of electrically insulating material on the sulfur particles of the electrode. The migration of the polysulfide ions from the cathode to anode can ultimately lead to discharge of the affected cell and to cell death in the battery. This unwanted migration of polysulfide ions is also referred to as "shuttling", a term which is also used in the context of the present invention.

Carbon sulfur composites are important components of the cathodes of lithium sulfur cells contributing significantly to the overall performance of lithium sulfur cells in particular with respect to lowering the internal impedance by providing a conductive element. Depending on the porous carbon architecture and its surface modification, the carbon framework can increase the coulombic efficiency, lower the degree of capacity fading, and help limit self-discharge by physically trapping polysulfide ions within the cathode although these effects are usually limited to shortterm cycling.

US 6,210,831 describes solid composite cathodes which comprise (a) sulfur-containing cathode material which, in its oxidized state, comprises a polysulfide moiety of the formula, -Sₘ-, wherein m is an integer from 3 to 10; and (b) a non-electroactive particulate material having a strong adsorption of soluble polysulfides.

US 8,173,302 describes an electrode material having carbon and sulfur, wherein the carbon is in the form of a porous matrix having nanoporosity and the sulfur is sorbed into the nanoporosity of the carbon matrix.

US 2013/0065127 describes sulfur cathodes for use in an electric current producing cells or rechargeable batteries. The sulfur cathode comprises an electroactive sulfur containing material, an electrically conductive filler and a non-electroactive component.

US 2013/0065128 describes a cathode including a hollow structure defining an internal volume and a sulfur-based material disposed within the internal volume wherein a characteristic dimension of the internal volume is at least 20 nm, and the sulfur-based material occupies less than 100 percent of the internal volume to define a void.

Zhao et al., Chem. Sci., 2012, 3, 433-437 discloses the synthesis of MnO₂ nanosheets from graphene oxide templates for high performance pseudosupercapacitors.

Liang, X. et al., A highly efficient polysulfide mediator for lithium-sulfur batteries, Nat. Commun. 6:5682 doi: 10.1038/ncomms6682 (2015) describes sulfur/manganese dioxide nanosheet composits wherein the manganese dioxide nanosheet have been prepared from graphene oxide templates.

The sulfur-containing electroactive composites or cathode materials described in the literature still have shortcomings with regard to one or more of the properties desired for such materials and the electrochemical cells produced therefrom. Desirable properties are, for example, high electrical conductivity of the cathode materials, maintenance of cathode capacity during lifetime, reduced self-discharge of the electrochemical cells during storage, an increase in the lifetime of the electrochemical cell, an improvement in the mechanical stability of the cathode, a reduced change in volume of the cathodes during a charge-discharge cycle or simple accessibility of suitable cathode materials. In general, the desired properties mentioned also make a crucial contribution to improving the economic viability of the electrochemical cell, which, as well as the aspect of the desired technical performance profile of an electrochemical cell, is of crucial significance to the user.

It was thus an object of the present invention to provide a beneficial sulfur-containing material or the corresponding cathode material for a lithium-sulfur cell, which have advantages over one or more properties of a known materials, more particularly a sulfur-containing material and accordingly the cathode material which enable the construction of cathodes with an improved electrical conductivity, combined with high cathode capacity, high mechanical stability, long lifetime and high economic viability.

This object is achieved by core-shell particles, each particle comprising
(A) a core comprising elemental sulfur and
(B) a shell, which enwraps core (A), comprising MnO₂.

In the context with the present invention, the electrode where during discharging a net negative charge occurs is called the anode and the electrode where during discharging a net positive charge occurs is called the cathode.

A particle of the inventive core-shell particles, also referred to hereinafter as core-shell particles (C), for short, comprises as first constituent a core, also referred to hereinafter as core (A), for short, which comprises sulfur, and as a second constituent a shell, also referred to hereinafter as shell (B), for short, which enwraps core (A) and which comprises MnO₂.

The dimensions of the inventive core-shell particles (C), that is for example the average particle size of the core-shell particles or the average thickness of shell (B) of the core-shell particles can be varied in a wide range depending on the applied process of production.

In one embodiment of the present invention, the inventive core-shell particles are characterized in that the average particle size of the core-shell particles is in the range from 0.1 µm to 100 µm and the ratio of the average thickness of the shell of the core-shell particles to the average particle size of said core-shell particles is in the range from 0.05% to 20%, preferably in the range from 0.25% to 10%, in particular in the range from 0.5% to 5%.

The mass fraction of elemental sulfur of the core of each particle can be varied in a wide range depending on the applied process of production and the used starting materials. It is possible that core (A) is formed of a mixture of elemental sulfur together with at least one electrochemically active or inactive component. Preferably the mass fraction of elemental sulfur of core (A) is in the range from 0.8 up to 1, preferably from 0.9 up to 1.

The mass fraction of MnO₂ of the shell of each particle can be varied in a wide range depending on the applied process of production and the used starting materials. It is possible that shell (B) is formed of a mixture of MnO₂ together with at least one additional component. Preferably the mass fraction of MnO₂ of shell (B) is in the range from 0.8 up to 1, preferably from 0.9 up to 1. In one embodiment of the present invention, the inventive core-shell particles are characterized in that the mass fraction of elemental sulfur of core (A) is in the range from 0.8 up to 1, preferably from 0.9 up to 1, and the mass fraction of MnO₂ of shell (B) is in the range from 0.8 up to 1, preferably from 0.9 up to 1.

Shell (B) can show different textures depending on the nature of the components forming shell (B). In particular the MnO₂, which builds shell (B), can show different forms depending on the origin of the MnO₂.

In one embodiment of the present invention, the inventive core-shell particles are characterized in that the shell of each particle comprises irregularly shaped MnO₂ nanosheets.

In the context with the present invention, the transition metal oxide of formula MnO₂ does not only comprise manganese dioxide of the exact stoichiometry but also manganese oxide compounds showing some degree of oxygen substoichiometry (δ) of the general formula AₓMnO_{2-δ}, wherein A is an alkali metal, x is a real number that usually ranges from 0 to 0.4 and δ is a real number that can span from 0 to 0.3, in particular from 0.10 to 0.15. A preferred manganese oxide compound showing some degree of oxygen substoichiometry (δ) of the general formula Aₓ₋MnO_{2-δ} is monoclinic birnessite.

In one embodiment of the present invention, the inventive core-shell particles are characterized in that the MnO₂ of shell (B) is monoclinic birnessite defined by the general formula AₓMnO_{2-δ}, wherein A is an alkali metal, x is a real number that usually ranges from 0 to 0.4 and δ is a real number that can span from 0 to 0.3, in particular from 0.10 to 0.15.

The mass fraction of elemental sulfur and the mass fraction of MnO₂ in core-shell particles (C) can be varied in a wide range depending on the applied process of production and the used starting materials. The mass fraction of elemental sulfur in the core-shell particles is preferably in the range from 0.5 to 0.95, in particular in the range from 0.6 to 0.85. The mass fraction of MnO₂ in the core-shell particles is preferably in the range from 0.05 to 0.5, in particular in the range from 0.15 to 0.4.

In one embodiment of the present invention, the inventive core-shell particles are characterized in that the mass fraction of elemental sulfur in the core-shell particles is in the range from 0.5 to 0.95.

In one embodiment of the present invention, the inventive core-shell particles are characterized in that the mass fraction of MnO₂ in the core-shell particles is in the range from 0.05 to 0.5.

In one embodiment of the present invention, the inventive core-shell particles are characterized in that the average particle size of the core-shell particles is in the range from 0.1 µm to 100 µm, the ratio of the average thickness of the shell of the core-shell particles to the average particle size of said core-shell particles is in the range from 0.05% to 20%, preferably in the range from 0.25% to 10%, in particular in the range from 0.5% to 5%, the mass fraction of elemental sulfur of core (A) is in the range from 0.8 up to 1 and the mass fraction of MnO₂ of shell (B) is in the range from 0.8 up to 1, and the mass fraction of elemental sulfur of the core-shell particles is in the range from 0.5 to 0.95.

The invention further provides a process for producing core-shell particles, each particle comprising
(A) a core comprising elemental sulfur and
(B) a shell, which enwraps core (A), comprising MnO₂,
   as described above, comprising the process steps of
   (a) reduction of permanganate MnO₄⁻ in the presence of a dispersion of sulfur and formation of sulfur-MnO₂-core-shell particles,
   (b) optionally isolation of the formed sulfur-MnO₂-core-shell particles and
   (c) optionally removing a portion of the enwrapped elemental sulfur from the sulfur-MnO₂-core-shell particles, which have been formed in process step (a), in order to generate voids in said particles,
wherein the order of the optional steps (b) and (c) can be changed.

The description and preferred embodiments of the core-shell particles (C) and their properties with respect to dimensions, composition and components, correspond to the above description of these features for the core-shell particles (C) of the present invention.

In process step (a) permanganate MnO₄⁻ is reduced in the presence of a dispersion of sulfur, in particular in the presence of an aqueous suspension of sulfur particles, and sulfur-MnO₂-core-shell particles are formed.

The dispersion of sulfur usually comprises sulfur particles, preferably solid sulfur particles, which are dispersed in a dispersant that is a liquid medium. Suitable dispersants are solvents, which preferably do not dissolve sulfur but dissolve a salt of permanganate MnO₄⁻ and which do not easily react with permanganate MnO₄⁻. Preferred examples are the inorganic solvent water or organic solvents such as acetic acid or ethyl acetate or mixtures of said solvents.

Sulfur particles of various sizes are known. Sulfur particles having an average particles size in the in the range from 1 µm up to 1 mm can be obtained by mechanical means like milling or as sublimed sulfur while sulfur particles having an average particles size in the nano-range are obtainable by chemical generation of sulfur particles in form of a colloidal suspension.

Permanganate MnO₄⁻ is usually used in form of its salts in the present invention. Preferred salts of permanganate are alkali metal or earth alkali metal salts of permanganate, preferably KMnO₄, RbMnO₄ or Ca(MnO₄)₂, in particular KMnO₄.

In one embodiment of the present invention, the inventive process is characterized in that in process step (a) the dispersion of sulfur is an aqueous suspension of sulfur particles, in particular an aqueous suspension of nano-sized sulfur particles, also called colloidal sulfur.

In process step (a) the molar ratio of sulfur to permanganate MnO₄⁻ can be varied in the wide range depending on the average size of the utilized sulfur particles and the aimed thickness of shell (B). Preferably in process step (a) the molar ratio of elemental sulfur to permanganate MnO₄⁻ is in the range from 100 to 1, preferably in the range from 80 to 2, in particular in the range from 50 to 5.

In one embodiment of the present invention, the inventive process is characterized in that in process step (a) the molar ratio of elemental sulfur to permanganate MnO₄⁻ is in the range from 100 to 1, preferably in the range from 80 to 2, in particular in the range from 50 to 5.

The reduction of permanganate MnO₄⁻ in process step (a) can take place in a wide temperature range. Depending on the freezing point and boiling point of the solvent or mixture of solvents used to dissolve the salt comprising permanganate and to disperse sulfur, in particular to suspend sulfur particles, a reaction temperature can be chosen. If the reaction takes place under pressure, for examples in an autoclave, the reaction temperature can be higher than the atmospheric pressure boiling point of the used solvent. The reduction of permanganate MnO₄⁻ in process step (a) is preferably carried out in a temperature range between -70°C and 150°C, preferably in a temperature range from 0 to 110 °C, especially in a temperature range from 20 to 80 °C.

In one embodiment of the present invention, the inventive process is characterized in that process step (a) takes place at a temperature in the range from 0 to 110 °C.

In optional process step (b) the sulfur-MnO₂-core-shell particles, which have been formed, preferably in process step (a) are isolated. Methods for the separation of solids from fluids are generally known. For example in process step b) the sulfur-MnO₂-core-shell particles can be isolated from the liquid by decantation, filtration or centrifugation. The isolation of the carbon-supported manganese oxide may also comprise additional washing steps and/or at least one drying step in order to remove adhering solvents. The sulfur-MnO₂-core-shell particles can be dried on completion of the washing procedure. The drying procedure is not critical per se. The drying temperature is usually not higher than the boiling temperature of the solvent used for washing. If the drying step takes place under reduced pressure the drying temperature can be significantly reduced below the boiling temperature of the adhering solvent. Flowable sulfur-MnO₂-core-shell particles can be obtained already after partial drying.

In optional process step (c) a portion of the enwrapped elemental sulfur is removed, from the sulfur-MnO₂-core-shell particles, which have been formed in process step (a) and which have been optionally isolated in optional process step (b), in order to generate voids in said particles. Sulfur can only be removed from the described sulfur-MnO₂-core-shell particles if shell (B) is porous for sulfur molecules such as S₈, either as gaseous sulfur or dissolved sulfur. That means that sulfur can be removed by a thermal treatment of the sulfur-MnO₂-core-shell particles at increased temperatures and/or reduced pressure. Alternatively the sulfur-MnO₂-core-shell particles are contacted with a solvent which dissolves elemental sulfur.
In order to remove a portion of the enwrapped elemental sulfur from the sulfur-MnO₂-core-shell particles, the sulfur-MnO₂-core-shell particles are preferably contacted with a certain amount of a solvent which dissolves elemental sulfur. The used amount of sulfur solvent can be calculated based on the intended amount of sulfur which is intended to be removed.

The order of the optional steps (b) and (c) can be changed that means that a portion of the enwrapped elemental sulfur from the sulfur-MnO₂-core-shell particles produced in process step (a) can be directly removed without prior isolation of the formed sulfur-MnO₂-core-shell particles. After removing a portion of enwrapped sulfur the resulting sulfur-MnO₂-core-shell particles which comprise a void inside of shell (B) can be isolated and further treated, e.g. dried, as described above.

In one embodiment of the present invention, the inventive process is characterized in that in process step (c) the sulfur-MnO₂-core-shell particles are treated with a solvent, which dissolves elemental sulfur.

The inventive process offers an easy and flexible access to sulfur-MnO₂-core-shell particles of desired composition and dimensions.

The inventive core-shell particles (C) can ultimately be used as an essential constituent of cathode materials for electrochemical cells, especially lithium-sulfur cells. Preferably the inventive core-shell particles (C) are combined with a carbon, which improves the electrical conductivity of the cathode material, and optionally at least one binder, which is typically an organic polymer. The binder serves principally for mechanical stabilization of the components of the electrode, by virtue of core-shell particles (C) and carbon particles being bonded to one another by the binder, and also has the effect that the cathode material has sufficient adhesion to an output conductor. The binder is preferably chemically inert toward the chemicals with which it comes into contact in an electrochemical cell.

The present invention further also provides a cathode material for an electrochemical cell comprising
(C) core-shell particles as described above
(D) carbon in a polymorph comprising at least 60% sp²-hybridized carbon atoms, and
(E) optionally at least one polymer as a binder.

The inventive cathode material for an electrochemical cell comprises in addition to the inventive core-shell particles (C), which have been described above, as a second component, carbon in a polymorph comprising at least 60% sp²-hybridized carbon atoms, also referred to hereinafter as carbon (D) for short, and optionally as component (E) a polymer as a binder, also referred to hereinafter as binder (E) for short.

The description and preferred embodiments of the core-shell particles (C) and their properties with respect to dimensions, composition and components, correspond to the above description.

Carbon (D), which improves the electrical conductivity of the inventive cathode material, can be selected from graphite, carbon black, carbon nanotubes, graphene or mixtures of at least two of the aforementioned substances. Suitable carbons in a conductive polymorph are described in WO 2012/168851 page 4, line 30 to page 6, line 22.

In one embodiment of the present invention, the inventive cathode material for an electrochemical cell is characterized in that carbon (D) is selected from graphite, graphene, activated carbon and especially carbon black.

In one embodiment of the present invention, the inventive cathode material for an electrochemical cell comprises at least one polymer as a binder.

Binder (E) can be selected from a wide range of organic polymers. Suitable binders are described in WO 2012/168851 page 6, line 40 to page 7, line 30.

Particularly suitable binders for the inventive cathode material for an electrochemical cell are especially polyvinyl alcohol, poly(ethylene oxide), carboxymethyl cellulose (CMC) and halogenated (co)polymers, for example polyvinyl chloride or polyvinylidene chloride, especially fluorinated (co)polymers such as polyvinyl fluoride and especially polyvinylidene fluoride, lithiated Nafion and polytetrafluoroethylene. Particularly preferred is a binder which is a mixture of crosslinked poly(acrylic acid) and polyvinyl alcohol.

In one embodiment of the present invention, the inventive cathode material for an electrochemical cell is characterized in that binder (E) is a mixture of crosslinked poly(acrylic acid) and polyvinyl alcohol.

In one embodiment of the present invention, the inventive cathode material for an electrochemical cell comprises in the range from 10 to 80% by weight, preferably 30 to 75% by weight, of sulfur, determined by elemental analysis, based on the total weight of the cathode material for an electrochemical cell.

In one embodiment of the present invention, the inventive cathode material for an electrochemical cell comprises in the range from 0.1 to 60% by weight of carbon in a conductive polymorph, preferably 1 to 30% by weight based on the total weight of the cathode material for an electrochemical cell. This carbon can likewise be determined by elemental analysis, for example, in which case the evaluation of the elemental analysis has to take into account the fact that carbon also arrives in organic polymers representing binders, and possibly further sources.

In one embodiment of the present invention, the inventive cathode material for an electrochemical cell comprises in the range from 0.1 to 20% by weight of binder, preferably 1 to 15% by weight and more preferably 3 to 12% by weight, based on the total weight of the cathode material for an electrochemical cell.

Inventive core-shell particles (C) and inventive cathode material are particularly suitable as or for production of cathodes, especially for production of cathodes of lithium-containing batteries. The present invention provides for the use of inventive core-shell particles (C) or inventive cathode materials as or for production of cathodes for electrochemical cells.

The present invention further also provides a cathode which has been produced from or using a cathode material as described above.

The inventive cathode may have further constituents customary per se, for example an current collector, which may be configured in the form of a metal wire, metal grid, metal mesh, expanded metal, metal sheet, metal foil or carbon paper/cloth. Suitable metal foils are especially aluminum foils.

In one embodiment of the present invention, the inventive cathode has a thickness in the range from 25 to 200 µm, preferably from 30 to 100 µm, based on the thickness without current collector.

A further feature of inventive core-shell particles (C) or inventive cathode materials is that it is possible in accordance with the invention to produce battery cells which are preferably stable over at least 30 cycles, more preferably over at least 50 cycles, even more preferably over at least 100 cycles, especially over at least 200 cycles or over at least 500 cycles.

In one embodiment of the present invention, core-shell particles (C) or inventive cathode material is processed to cathodes, for example in the form of continuous belts which are processed by the battery manufacturer.

Inventive cathodes produced from core-shell particles (C) or inventive cathode material may have, for example, thicknesses in the range from 20 to 500 µm, preferably 40 to 200 µm. They may, for example, be in the form of rods, in the form of round, elliptical or square columns or in cuboidal form, or in the form of flat cathodes.

The present invention further provides electrochemical cells comprising at least one inventive cathode as described above, which has been produced from or using at least one inventive core-shell particles (C) or at least one inventive cathode material as described above.

During the charging process of an inventive electrochemical cell the inventive cathode comprises usually a mixture of different electroactive sulfur-containing materials since more and more S-S-bonds are formed.

In one embodiment of the present invention, inventive electrochemical cells comprise, as well as inventive cathode, which comprises inventive core-shell particles (C) respectively inventive cathode material, at least one anode comprising at least one alkali metal like lithium, sodium or potassium. Preferably the anode of the inventive electrochemical cell comprises lithium.

The alkali metal of anode of the inventive electrochemical cell can be present in the form of a pure alkali metal phase, in form of an alloy together with other metals or metalloids, in form of an intercalation compound or in form of an ionic compound comprising at least one alkali metal and at least one transition metal.

The anode of the inventive electrochemical cell can be selected from anodes being based on various active materials. Suitable active materials are metallic lithium, carbon-containing materials such as graphite, graphene, charcoal, expanded graphite, in particular graphite, furthermore lithium titanate (Li₄Ti₅O₁₂), anodes comprising In, TI, Sb, Sn or Si, in particular Sn or Si, for example tin oxide (SnO₂) or nanocrystalline silicon, and anodes comprising metallic lithium.
In one embodiment of the present invention the electrochemical cell is characterized in that the anode of the inventive electrochemical cell is selected from graphite anodes, lithium titanate anodes, anodes comprising In, TI, Sb, Sn or Si, and anodes comprising metallic lithium.

In one embodiment of the present invention, the inventive electrochemical cell is characterized in that the alkali metal of the anode is lithium.

The anode of the inventive electrochemical cell can further comprise a current collector. Suitable current collectors are, e.g., metal wires, metal grids, metal gauze and preferably metal foils such as copper foils.

The anode of the inventive electrochemical cell can further comprise a binder. Suitable binders can be selected from organic (co)polymers. Suitable organic (co)polymers may be halogenated or halogen-free. Examples are polyethylene oxide (PEO), cellulose, carboxymethyl cellulose, polyvinyl alcohol, polyethylene, polypropylene, polytetrafluoroethylene, polyacrylonitrile-methyl methacrylate, styrene-butadiene copolymers, tetrafluoroethylene-hexafluoropropylene copolymers, vinylidene fluoride-hexafluoropropylene copolymers (PVdF-HFP), vinylidene fluoridetetrafluoroethylene copolymers, perfluoroalkyl vinyl ether copolymers, ethylenetetrafluoroethylene copolymers, vinylidene fluoride-chlorotrifluoroethylene copolymers, ethylenechlorofluoroethylene copolymers, ethylene-acrylic acid copolymers, optionally at least partially neutralized with alkali metal salt or ammonia, ethylene-methacrylic acid copolymers, optionally at least partially neutralized with alkali metal salt or ammonia, ethylene-(meth)acrylic ester copolymers, polysulfones, polyimides and polyisobutene.

Suitable binders are especially polyvinyl alcohol and halogenated (co)polymers, for example polyvinyl chloride or polyvinylidene chloride, especially fluorinated (co)polymers such as polyvinyl fluoride and especially polyvinylidene fluoride and polytetrafluoroethylene.

The average molecular weight M_{w} of binder may be selected within wide limits, suitable examples being 20,000 g/mol to 1,000,000 g/mol.

In one embodiment of the present invention, the anode of the inventive electrochemical cell can have a thickness in the range of from 15 to 200 µm, preferably from 30 to 100 µm, determined without the current collector.

The inventive electrochemical cell further comprises, as well as the inventive cathode and an anode, at least one electrolyte composition comprising at least one solvent and at least one alkali metal salt.

As regards suitable solvents and further additives for nonaqueous liquid electrolytes for lithium-based rechargeable batteries reference is made to the relevant prior art, e.g. Chem Rev. 2004, 104, 4303-4417, in particular table 1 on page 4307, table 2 on page 4308 and table 12 on page 4379.

The solvents of the electrolyte composition can be chosen from a wide range of solvents, in particular from solvents which dissolve alkali metal salts easily. Solvents or solvent systems, which dissolve alkali metal salts are for example ionic liquids, polar solvents or combinations of apolar solvents combined with polar additives like crown ethers, like 18-crown-6, or cryptands. Example of polar solvents are polar protic solvents or dipolar aprotic solvents.

Examples of polar protic solvents are water, alcohols like methanol, ethanol or iso-propanol, carbonic acids like acetic acid, ammonia, primary amines or secondary amines. Polar protic solvents can only be used in electrochemical cell comprising an anode, which comprises an alkali metal, if any contact between that anode and the polar protic solvent is strictly precluded by an appropriate separator.

Examples of dipolar aprotic solvents are organic carbonates, esters, ethers, sulfones like DMSO, sulfamides, amides like DMF or DMAc, nitriles like acetonitrile, lactams like NMP, lac-tones, linear or cyclic peralkylated urea derivatives like TMU or DMPU, fluorinated ether, fluorinated carbamates, fluorinated carbonated or fluorinated esters.

Suitable solvents of the electrolyte composition may be liquid or solid at room temperature and are preferably liquid at room temperature.

In one embodiment of the present invention the inventive electrochemical cell is characterized in that the solvent is a dipolar aprotic solvent.

A suitable solvent is preferably selected from polymers, cyclic or noncyclic ethers, cyclic or noncyclic acetals, cyclic or noncyclic organic carbonates and ionic liquids.

In one embodiment of the present invention the inventive electrochemical cell is characterized in that the solvent is selected from polymers, cyclic or noncyclic ethers, noncyclic or cyclic acetals and cyclic or noncyclic organic carbonates.

Examples of suitable polymers are especially polyalkylene glycols, preferably poly-C₁-C₄-alkylene glycols and especially polyethylene glycols. Polyethylene glycols may comprise up to 20 mol% of one or more C₁-C₄-alkylene glycols in copolymerized form. Polyalkylene glycols are preferably doubly methyl- or ethyl-capped polyalkylene glycols.

The molecular weight M_{w} of suitable polyalkylene glycols and especially of suitable polyethylene glycols may be at least 400 g/mol.

The molecular weight M_{w} of suitable polyalkylene glycols and especially of suitable polyethylene glycols may be up to 5 000 000 g/mol, preferably up to 2 000 000 g/mol.

Examples of suitable noncyclic ethers are, for example, diisopropyl ether, di-n-butyl ether, 1,2-dimethoxyethane, 1,2-diethoxyethane, preference being given to 1,2-dimethoxyethane.

Examples of suitable cyclic ethers are tetrahydrofuran and 1,4-dioxane.

Examples of suitable noncyclic acetals are, for example, dimethoxymethane, diethoxymethane, 1,1-dimethoxyethane and 1,1-diethoxyethane.

Examples of suitable cyclic acetals are 1,3-dioxane and especially 1,3-dioxolane.

Examples of suitable noncyclic organic carbonates are dimethyl carbonate, ethyl methyl carbonate and diethyl carbonate.

Examples of suitable cyclic organic carbonates are compounds of the general formulae (X) and (XI) 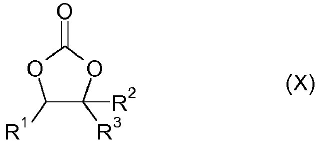 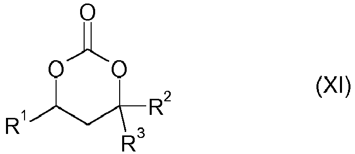 in which R¹, R² and R³ may be the same or different and are each selected from hydrogen and C₁-C₄-alkyl, for example methyl, ethyl, n-propyl, isopropyl, n-butyl, isobutyl, sec-butyl and tert-butyl, where R² and R³ are preferably not both tert-butyl.

In particularly preferred embodiments, R¹ is methyl and R² and R³ are each hydrogen, or R¹, R² and R³ are each hydrogen.

Another preferred cyclic organic carbonate is vinylene carbonate, formula (XII).

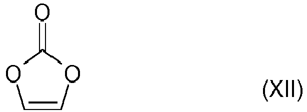

Preference is given to using the solvent(s) in what is called the anhydrous state, i.e. with a water content in the range from 1 ppm to 0.1 % by weight, determinable, for example, by Karl Fischer titration.

Possible alkali metal salts, which are used as conductive salts, have to be soluble in the solvent. Preferred alkali metal salts are lithium salts or sodium salts, in particular lithium salts.

In one embodiment of the present invention the inventive electrochemical cell is characterized in that the alkali metal salt is a lithium salt or sodium salt, preferably a lithium salt.

Suitable alkali metal salts are especially lithium salts. Examples of suitable lithium salts are LiPF₆, LiBF₄, LiClO₄, LiAsF₆, LiCF₃SO₃, LiC(CₙF₂ₙ₊₁SO₂)₃, lithium imides such as LiN(CₙF₂ₙ₊₁SO₂)₂, where n is an integer in the range from 1 to 20, LiN(SO₂F)₂, Li₂SiF₆, LiSbF₆, LiAlCl₄, and salts of the general formula (CₙF₂ₙ₊₁SO₂)ₘXLi, where m is defined as follows:
m = 1 when X is selected from oxygen and sulfur,
m = 2 when X is selected from nitrogen and phosphorus, and
m = 3 when X is selected from carbon and silicon.

Preferred alkali metal salts are selected from LiC(CF₃SO₂)₃, LiN(CF₃SO₂)₂, LiPF₆, LiBF₄, LiClO₄, and particular preference is given to LiPF₆ and LiN(CF₃SO₂)₂.

In one embodiment of the present invention, the concentration of conductive salt in electrolyte is in the range of from 0.01 M to 5 M, preferably 0.5 M to 1.5 M.

In one embodiment of the present invention, inventive electrochemical cells comprise one or more separators by which the electrodes are mechanically separated from one another. Suitable separators are polymer films, especially porous polymer films, which are unreactive toward metallic lithium and toward lithium sulfides and lithium polysulfides. Particularly suitable materials for separators are polyolefins, especially porous polyethylene films and porous polypropylene films.

Polyolefin separators, especially of polyethylene or polypropylene, may have a porosity in the range from 35 to 45%. Suitable pore diameters are, for example, in the range from 30 to 500 nm.

In another embodiment of the present invention, the separators selected may be separators composed of PET nonwovens filled with inorganic particles. Such separators may have a porosity in the range from 40 to 55%. Suitable pore diameters are, for example, in the range from 80 to 750 nm.

In one embodiment of the present invention, inventive electrochemical cells can contain additives such as wetting agents, corrosion inhibitors, or protective agents such as agents to protect any of the electrodes or agents to protect the salt(s).

In one embodiment of the present invention, inventive electrochemical cells can have a disc-like shape. In another embodiment, inventive electrochemical cells can have a prismatic shape.

In one embodiment of the present invention, inventive electrochemical cells can include a housing that can be from steel or aluminium.

In one embodiment of the present invention, inventive electrochemical cells are combined to stacks including electrodes that are laminated.

In one embodiment of the present invention, inventive electrochemical cells are selected from pouch cells.

Inventive electrochemical cells, in particular rechargeable lithium sulfur cells, comprising the inventive core-shell particles (C) have overall advantageous properties. They exhibit good capacity, a low capacity fade rate per cycle, and good cycling stability on extended cycling.

A further aspect of the present invention refers to batteries, in particular to rechargeable lithium sulfur batteries, comprising at least one inventive electrochemical cell, for example two or more. Inventive electrochemical cells can be combined with one another in inventive batteries, for example in series connection or in parallel connection. Series connection is preferred.

Inventive batteries, in particular rechargeable lithium sulfur batteries, have advantageous properties. They exhibit good capacity, a low capacity fade rate per cycle, and good cycling stability on extended cycling.

The inventive electrochemical cells or inventive batteries can be used for making or operating cars, computers, personal digital assistants, mobile telephones, watches, camcorders, digital cameras, thermometers, calculators, laptop BIOS, communication equipment or remote car locks, and stationary applications such as energy storage devices for power plants. A further aspect of the present invention is a method of making or operating cars, computers, personal digital assistants, mobile telephones, watches, camcorders, digital cameras, thermometers, calculators, laptop BIOS, communication equipment, remote car locks, and stationary applications such as energy storage devices for power plants by employing at least one inventive battery or at least one inventive electrochemical cell.

A further aspect of the present invention is the use of the electrochemical cell as described above in motor vehicles, bicycles operated by electric motor, aircraft, ships or stationary energy stores.
The use of inventive electrochemical cells in devices gives the advantage of prolonged run time before recharging and a smaller loss of capacity in the course of prolonged run time. If the intention were to achieve an equal run time with electrochemical cells with lower energy density, a higher weight for electrochemical cells would have to be accepted.

The present invention further provides a device comprising at least one inventive electrochemi-cal cell as described above. Preferred are mobile devices such as are vehicles, for example automobiles, bicycles, aircraft, or water vehicles such as boats or ships. Other examples of mobile devices are those which are portable, for example computers, especially laptops, telephones or electrical power tools, for example from the construction sector, especially drills, battery-driven screwdrivers or battery-driven tackers.

The invention is illustrated by the examples which follow, but these do not restrict the invention.

Figures in percent are each based on % by weight, unless explicitly stated otherwise.

Characterization: XRD measurements were carried out on a Bruker D8-Advance powder X-ray diffractometer operating at 40 kV and 30 mA and using Cu-Kα radiation (λ=0.15405 nm). SEM studies were carried out on a Zeiss Ultra field emission SEM instrument. TEM was performed on a Jeol 2010F TEM/STEM operating at 200KeV. The surface area was determined from nitrogen adsorption and desorption isotherms performed on a Quantachrome Autosorb-1 instrument. Before measurement, the samples were degassed at 60°C on a vacuum line. Surface areas were calculated using the Brunauer-Emmett-Teller (BET) method. Thermogravimetric analysis (TGA) was used to determine the sulfur content of the material, on a TA Instruments SDT Q600 employing a heating rate of 10 °C/min from room temperature to 800 °C under an air flow.

### I. Synthesis of core-shell particles

### I.1 Synthesis of nano-sized sulfur core/MnO₂ (NS-core/MnO₂) CSP-1

Na₂S₂O₃ (2.37 g) in 50 ml water was slowly added into a dilute sulfuric acid solution (500ml, 14.4 mM) containing 1 g of polyvinylpyrrolidone (PVP, Mw∼40,000). After stirring for 2 hours at room temperature, the sulfur nanoparticles were collected by centrifugation. The as-prepared sulfur nanoparticles (83.8 mg) were re-dispersed into 100 ml aqueous solution, and 50 ml KMnO₄ (2.5 mM) was added dropwise to the nano-sized sulfur suspension. The mixture was stirred for 2 hours at room temperature and then was filtered.

### I.2 Synthesis of sublimed sulfur core/MnO₂ (SS-core/MnO₂) CSP-2

Commercial sulfur (Alfa Aesar, >99.5%) was used as received. Commercial sulfur (1 g) was dispersed in 170 ml of deionized water by sonication for 1 hour. KMnO₄ (250 mg) was dissolved in 50 mL DI water and poured into the sulfur suspension. The mixture was stirred at 60 °C for 24 hours. The dark-brown powder was collected by filtration.

### II. Removal of sulfur from core-shell particles by toluene rinsing

Sulfur has moderate solubility in toluene (1.7, mass fraction at 20 °C). A calculated amount of toluene was mixed with ethanol (1:5 volume ratio) and the NS-core/MnO₂ composite (CSP-1) or SS-core/MnO₂ composite (CSP-2) was suspended in the solution and stirred at room temperature for 30 minutes. To obtain a pure MnO₂ shell devoid of sulfur, the composite was soaked in pure toluene at 60 °C at least 3 times. The desired products were obtained by filtration and dried at 60 °C overnight.

### II. Production of cathodes

### II.1 General procedure for production of inventive cathodes

The MnO₂ coated sulfur composite (core-shell particles) was mixed with super P and PVDF in a weight ratio of 8: 1: 1 in DMF. Cathodes were prepared by drop casting the DMF slurry on carbon paper current collector and were dried at 60 °C overnight. For the high sulfur loading electrodes, the slurry was made from rinsed SS-core/MnO₂, Super P and PAA/PVA (9:1 weight) in a weight ratio of 8: 1: 1 in water.

### III. Testing of the cathodes in electrochemical cells

For the electrochemical tests, lithium foil was employed as the anode with a Celgard 3051 separator (25 µm, microporous monolayer PP membrane) in a 2325 coin cell. The electrolyte was 1 M bis-(trifluoroethanesulfony)imide lithium (LiTFSI) in mixed solvent of 1,2-dimethoxyethane (DME) and 1,3-dioxolane (DOL) (v/v= 1:1), with 2 wt% of LiNO₃. Different cut-off voltages were selected to ensure fully discharge at different rates, i.e.: 1.8- 3.0 V for 0.05C, 0.2C, 0.5C and 1 C; 1.7- 3.0 V for 2C, 3C, 1.6- 3.0 V for 4C and 1.5-3.0 V for 6C, 7C, 8C (1 C = 1675 mAh g⁻¹).

The resulting test data of two electrochemical cells are summarized in Table 1.

**Table 1: Test results of inventive electrochemical cells**

| Example | Discharge capacity 5th cycle [mA·h/g S] | Discharge capacity 30th cycle [mA·h/g S] | Discharge capacity 50th cycle [mA·h/g S] | Discharge capacity 70th cycle [mA·h/g S] | Discharge capacity 500th cycle [mA·h/g S] |
|---|---|---|---|---|---|
| Inventive cathode based on CSP-1 | 1070 | 1065 | 1060 | 1055 | 690 |
| Inventive cathode based on CSP-2 | 1030 | 965 | 945 | 940 | 580 |

## Claims

1. Core-shell particles, each particle comprising
(A) a core comprising elemental sulfur and
(B) a shell, which enwraps core (A), comprising MnO₂.

2. Core-shell particles according to claim 1, wherein the average particle size of the core-shell particles is in the range from 0.1 µm to 100 µm and the ratio of the average thickness of the shell of the core-shell particles to the average particle size of said core-shell particles is in the range from 0.05% to 20%.

3. Core-shell particles according to claim 1 or 2, wherein the mass fraction of elemental sulfur of core (A) is in the range from 0.8 up to 1 and the mass fraction of MnO₂ of shell (B) is in the range from 0.8 up to 1.

4. Core-shell particles according to any of claims 1 to 3, wherein the shell of each particle comprises irregularly shaped MnO₂ nanosheets.

5. Core-shell particles according to any of claims 1 to 4, wherein the mass fraction of elemental sulfur of the core-shell particles is in the range from 0.5 to 0.95.

6. A process for producing core-shell particles, each particle comprising
(A) a core comprising elemental sulfur and
(B) a shell, which enwraps core (A), comprising MnO₂,
according to any of claims 1 to 5, comprising the process steps of
(a) reduction of permanganate MnO₄⁻ in the presence of a dispersion of sulfur and formation of sulfur-MnO₂-core-shell particles,
(b) optionally isolation of the formed sulfur-MnO₂-core-shell particles and
(c) optionally removing a portion of the enwrapped elemental sulfur from the sulfur-MnO₂-core-shell particles, which have been formed in process step (a), in order to generate voids in said particles,
wherein the order of the optional steps (b) and (c) can be changed.

7. The process according to claim 6, wherein in process step (a) the dispersion of sulfur is an aqueous suspension of sulfur particles.

8. The process according to claim 6 or 7, wherein in process step (a) the molar ratio of elemental sulfur to permanganate MnO₄⁻ is in the range from 100 to 1.

9. The process according to any of claims 6 to 8, wherein process step (a) takes place at a temperature in the range from 0 to 110 °C.

10. The process according to any of claims 6 to 9, wherein in process step (c) the sulfur-MnO₂-core-shell particles are treated with a solvent, which dissolves elemental sulfur.

11. A cathode material for an electrochemical cell comprising
(C) core-shell particles according to any of claims 1 to 5,
(D) carbon in a polymorph comprising at least 60% sp²-hybridized carbon atoms, and
(E) optionally at least one polymer as a binder.

12. A cathode which has been produced from or using a cathode material according to claim 11.

13. An electrochemical cell comprising at least one cathode according to claim 12.

14. A battery comprising at least one electrochemical cell according to claim 13.

15. A device comprising at least one electrochemical cell according to claim 13.
